# EUROPEAN PATENT APPLICATION

(11) **EP 2 420 978 A2**
(43) Date of publication of application: **22.02.2012**
(21) Application number: 11174806.7
(22) Date of filing: 21.07.2011
(51) Int. Cl.: G06T 11/00

(54) **Apparatus and method for providing object information**

(30) Priority: 20.08.2010 KR 20100080781
(71) Applicant: Pantech Co., Ltd., Seoul 121-270 (KR)
(72) Inventor: Jin, Yong-Geun, 121-270 Seoul (KR)
(74) Representative: Jordan, Volker Otto Wilhelm

(57) **Abstract**

An apparatus for providing attribute information about an object being displayed on a screen of the apparatus in an augmented reality a method thereof are provided. The apparatus for displaying an object, which is extracted from an image input, such as a camera, includes a communication unit, an object recognition unit and a control unit. The communication unit is configured to perform data communication with respect to an object server which stores images of a plurality of objects and attribute information of each object. The object recognition unit is configured to extract the object from the image input and recognize the object. The apparatus determines the attribute information of the object being displayed based on a state of the object and provides attribute information.

## Description

### CROSS-REFERENCE TO RELATED APPLICATION

This application claims priority from and the benefit under 35 U.S.C. §119(a) of Korean Patent Application No. 10-2010-0080781, filed on August 20, 2010, which is incorporated by reference for all purposes as if fully set forth herein.

### BACKGROUND

FIELD

This disclosure relates to augmented reality (AR), and more particularly, to an apparatus and method for providing attribute information of an object.

DISCUSSION OF THE BACKGROUND

AR is a type of virtual reality obtained by combining a real world viewed by a user with a virtual world having additional information. Unlike virtual reality (VR), which provides a display of a virtual space and a virtual object, AR provides additional information, by adding a virtual object to the real world. That is, unlike VR, which is obtained using only a virtual world, AR is obtained by combining a virtual object with the real world, thereby providing a user with an image of reality with additional information. Various kinds of AR services have become available due to the development of the computing capability of mobile devices, such as mobile phones, Personal Digital Assistants (PDAs), Ultra Mobile Personal Computers (UMPCs), etc. and wireless network apparatus.

As an example, an object of the real world captured by a camera of a mobile phone and attribute information related to the object are processed to virtual information that is merged with another object in the real world and displayed together. In such a conventional AR service, if a plurality of objects is displayed, attribute information of each object may not be efficiently provided. That is, AR services display attribute information of the object if an object is focused within a predetermined area of a display of a mobile phone, or display attribute information of the object regardless of the user's intention.

### SUMMARY

In one aspect, there is provided an apparatus and method for providing object information, capable of providing attribute information of an object according to stages depending on the state of the object displayed on a screen.

Additional features of the invention will be set forth in the description which follows, and in part will be apparent from the description, or may be learned by practice of the invention.

An exemplary embodiment provides for an apparatus to display an object extracted from an image, the apparatus including a communication unit to communicate to an object server, the object server stores objects and corresponding attribute information; an object recognition unit to recognize the object; and a control unit to control a display of attribute information with the recognized object, an amount of the attribute information corresponding to a predetermined weighting of the recognized object stored in the object server.

Exemplary embodiment provide a method for displaying an object extracted from an image and attribute information about the object on an apparatus, the method including recognizing the object from the image input; determining an amount of attribute information displayed related to the recognized object by based on a weight information storage unit, the weight information storage unit storing a weight condition value used to determine the amount of attribute information displayed; and receiving the determined amount of attribute information an object server that stores a plurality of objects and attribute information about the plurality of objects; and displaying the attribute information together with the recognized object.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating an example of an apparatus according to an exemplary embodiment of the present invention.

FIG. 2 is a diagram illustrating a display of an apparatus according to an exemplary embodiment of the present invention.

FIG. 3 is a diagram illustrating a display of an apparatus according to an exemplary embodiment of the present invention.

FIG. 4 is a diagram illustrating a display of the apparatus that displays attribute information according to an exemplary embodiment of the present invention.

FIG. 5 is a flowchart showing an example of a method for displaying attribute information according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element or layer is referred to as being "directly on" or "directly connected to" another element or layer, there are no intervening elements or layers present.

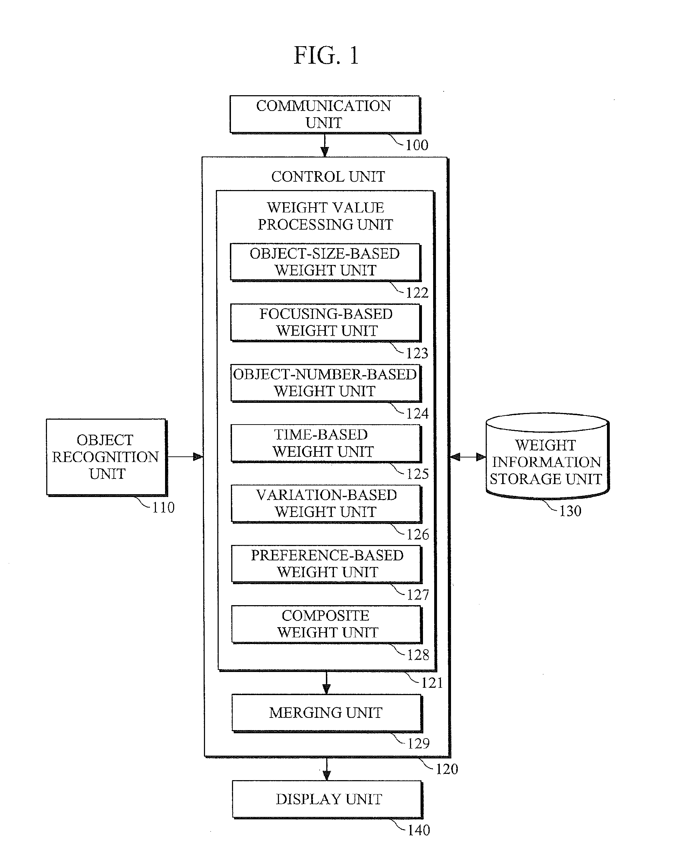

FIG. 1 is a block diagram illustrating an example of an apparatus for according to an exemplary embodiment of the present invention.

As shown in FIG. 1, an apparatus to provide information of an object (at various stages of display) includes a communication unit 100, an object recognition unit 110, a control unit 120, a weight information storage unit 130 and a display unit 140. The apparatus may be a mobile device or stationary terminal, such as a mobile phone, tablet computer or the like. The communication unit 100 communicates with an object server (not shown), such as through a wireless or wired network. The apparatus may send an object of an image to an object server, the object being a distinct item in an image, such as a building or sign. The image is displayed through the display unit 140, and may be displayed with object attribute information, which may include a state of the corresponding object. The apparatus receives attribute information from the object server, corresponding to the state of the object, such as its location in the image, through the communication unit 100. The object server stores images of a plurality of objects, and corresponding attribute information based on the state of the object relative to an image or an apparatus.

The object recognition unit 110 extracts and recognizes an object from an image, which may be input through a camera built in the apparatus. However, other image sources may be used, such as images received from an external camera or an image file stored in the apparatus or externally. The apparatus receives attribute information based on the state of the object relative an image from the object server through the communication unit 100. The control unit 120 may perform a control operation based on the recognized object the attribute information that is based on a weight condition. Various weight conditions may be used, with several examples being discussed below. The control unit 120 may perform a control operation to combine the attribute information with the recognized object, and display an image containing at least the recognized object and the attribute information of the recognized object on the apparatus through the display unit 140. The control unit 120 may perform such an operation in conjunction with a weight value processing unit 121 and a merging unit 129.

The weight value processing unit 121 determines a weight associated with the attribute information of an object being displayed, and stores weight condition values used to determine the attribute information about a plurality of objects. Accordingly, the weight value processing unit 121 determines the attribute information of an object being displayed, by use of the weight condition values stored in the weight information storage unit 130. Accordingly, the attribute information about an object represents information used to determine the range of opening attribute information of an object to be displayed. After the attribute information of an object is determined by the weight value processing unit 121, the merging unit 129 receives attribute information based on the determined stage of attribute information from the object server and combines the received attribute information with the corresponding object to display both pieces of information on the display unit 140.

The weight value processing unit 121 may determine attribute information of an object displayed through an object-size-based weight unit 122. The object-size-based weight unit 122 determines the size of the recognized object, and then assigns attribute information based on the size of the recognized object. The size may depend on the distance between the apparatus and the object, and thus, the attribute information associated with the object may be determined by the use of a weight condition value related to size. The area of the recognized object being displayed may depend on the distance between the object and the apparatus. Accordingly, the object-size-based weight unit 122 determines that attribute information associated with a smaller object displayed is briefer in scope, while a larger object displayed has more detailed attribute information to be displayed, and may have attribute information that contains more information. Accordingly, the apparatus may provide various amounts of attribute information that corresponds with the size of an object in a display. Although FIG. 1 shows weight value processing unit 121 as including each of elements 122, 123, 124, 125, 126, 127 and 128, aspects are not limited thereto such that weight value processing 121 may include 1 or more of the elements.

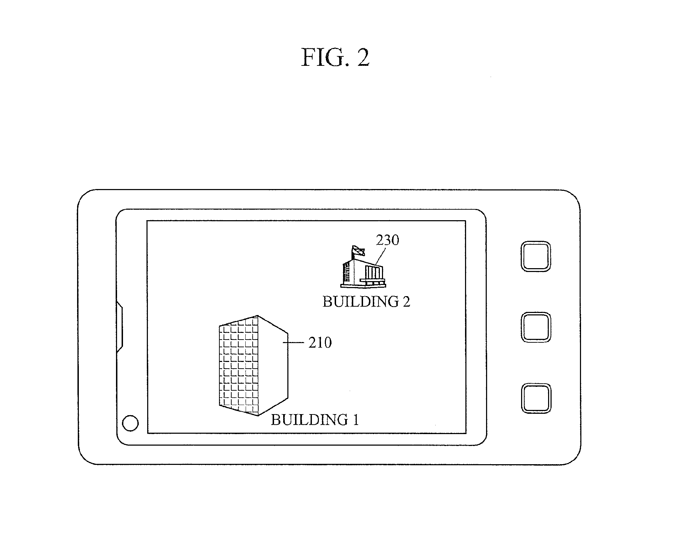

FIG. 2 is a diagram illustrating a display of an apparatus according to an exemplary embodiment of the present invention.

As shown in FIG. 2, if a user specifies a region to be photographed by a camera associated with an apparatus, an image of the region is taken by the camera. The apparatus recognizes a building 1 210 and a building 2 230 corresponding to objects from the image obtained by the camera. The object-size-based weight unit 122 may determine attribute information of the building 1210 and the building 2 230 based on the size of the buildings 1 and 2 210 and 230 being displayed. That is, the apparatus determines attribute information of the buildings 1 and 2 210 and 230 corresponding to the sizes of the buildings 1 and 2 210 and 230, by according to a weight condition value related to the size of an obj ect that is stored in the weight information storage unit 130. In further detail, because the building 2 230 is farther from the apparatus than the building 1 210, the area of the building 2 230 being displayed is smaller than that of the building 1 210. Accordingly, the apparatus determines the attribute information of the building 2 230 as a "basic-stage", and provides basic attribute information of the building 2 230. For example, basic attribute information may be the name of the building 2 230. Thus, in this case, the display may show building 2 230 with a label showing the name of the building. Because building 1 210 is closer to the apparatus than the building 2 230, the area of the building 1 210 as displayed is larger than that of the building 2 230. Accordingly, the apparatus determines the attribute information of the building 1 210 as a "detail-stage", and provides detailed attribute information. Detailed attribute information may include the name and detailed information of the building 1 210. Thus, in this case, the display may show building 1 210 along with a label showing the name of the building and detailed attribute information. Different combinations of information may be preset in an object server to be displayed based on various locations and sizes of the object.

According to another example, the weight value processing unit 121 may determine attribute information of an object being displayed according to a focusing-based weight unit 123. The focusing-based weight unit 123 determines attribute information of an object based on the difference in a distance between a point where the object is displayed and the center point of the display, by use of a weight condition value related to screen focusing that is stored in the weight information storage unit 130. That is, the focusing-based weight unit 123 determines that detailed attribute information of the object is used if the object being displayed moves further toward the center point of the display, and that brief attribute information of the object is used if the object being displayed moves further from the center point of the display. In this manner, the apparatus provides brief attribute information or detailed attribute information corresponding to an object based on the difference in a distance between the point where the object is displayed and the center point of where the object is displayed.

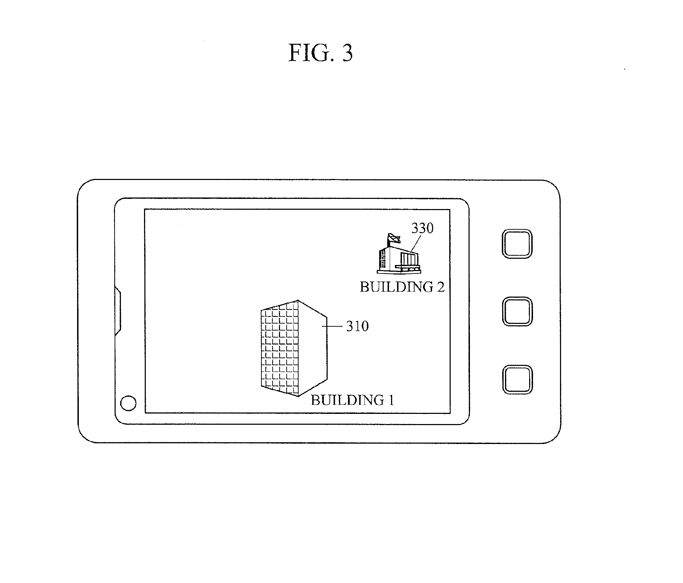

FIG. 3 is a diagram illustrating a display of the apparatus according to an exemplary embodiment of the present invention.

As shown in FIG. 3, if a user captures an image using a camera, and provides the image to a an apparatus, buildings 1 310 and 2 330 corresponding to objects that may be extracted and recognized from the image by the object recognition unit 110. The apparatus acquires points, at which the buildings 1 and 2 310 and 330 are displayed, through the focusing-based weight unit 123. The apparatus acquires distance information of the points of the buildings 1 and 2310 and 330 displayed with respect to the center point of the display. The focusing-based weight unit 123 determines the attribute information related to the buildings 1 and 2310 and 330 based on the distance between the points of the buildings 1 and 2310 and 330 being displayed on the screen with respect to the center point of the screen. Thus, because building 1 310 is closer than the building 2 330 to the center point of the screen, the focusing-based weight unit 123 determines the attribute information of the building 1 310 is a "detail-stage", and provides detailed attribute information to be displayed along with the corresponding object, and that the attribute information of the building 2 330 is a "brief-stage", and provides brief attribute information to be displayed along with the corresponding object. As the amount of attribute information of the buildings 1 and 2 310 and 330 are determined through the focusing-based weight unit 123, the apparatus receives attribute information including the name and detailed information of the building 1 310 from the object server and displays the received attribute information together with the building 1 310. In addition, the apparatus receives brief attribute information including the name of the building 2 330 from the object server and displays the received attribute information together with the building 2 330.

According to another example, the weight value processing unit 121 may determine the attribute information of an object being displayed according to an object-number-based weight unit 124. The object-number-based weight unit 124 determines the attribute information of an object based on the number of objects being displayed by referring to the weight information storage unit 130 that stores a weight condition value based on the number of objects being displayed. For example, if only one object is being displayed, the object-number-based weight unit 124 determines the attribute information of the object is a "detail-stage", and provides detailed attribute information. If, for example, at least three objects are being displayed, the object-number-based weight unit 124 determines the stage of attribute information of the object is a "brief-stage", and provides brief attribute information. In this manner, the apparatus receives brief attribute information or detailed attribute information corresponding to an object according to a stage determined by the object-number-based weight unit 124 from the object server and displays the received attribute information together with the object.

According to another example, the weight value processing unit 121 may determine attribute information of an object displayed according to a time-based weight unit 125. The time-based weight unit 125 determines the attribute information of a corresponding object by checking if the object being displayed on the screen changes in position information during a predetermined time after a specific time point, at which the recognized object is displayed by referring to the weight information storage unit 130. In further detail, the time-based weight unit 125 acquires position information of an object being displayed at a specific time. After that, the time-based weight unit 125 determines if there is a change of the acquired position information of the object during a specific time.

For example, if a user takes a picture or provides an image of a scene, while moving, it may be determined that position information of an object that has been extracted from the picture and recognized varies over time. Thus, the time-based weight unit 125 may determine that the attribute information of the recognized object is "brief-stage", and thus display the brief attribute information along with an object. If a user is standing still, or not moving very much, the user may take a picture or provide an image of a scene, and it may be determined that position information of an object that has been extracted from the picture and recognized does not change within a time less than a specific time. Thus, the time-based weight unit 125 determines the attribute information of the recognized object is "detail-stage", and display detailed information along with the object. Thus, in this example, a time-based weight unit 125 may vary the amount of information incorporated as attribute information based on the movement of an apparatus device. As described above, the apparatus sets the stage of attribute information of a corresponding object through the time-based weight unit 125 based on the change of the object in position information, thereby providing brief attribute information or detailed attribute information corresponding to an object.

According to another example, the weight value processing unit 121 may determine attribute information of an object displayed according to a variation-based weight unit 126. The variation-based weight unit 126 determines attribute information to be displayed based on the size of variation or the movement variation of the recognized object being displayed, by referring to the weight information storage unit 130 that stores a weight condition value depending on a variation of the object. For example, if an object moves from a boundary of the display to the center of the display, it is determined that a movement variation from the boundary to the center of the display occurs, so the variation-based weight unit 126 determines attribute information of the object is at "detail-stage" and thus displays detailed attribute information along with an object. Accordingly, the apparatus receives detailed attribute information according to the stage determined by the variation-based weight unit 126 from the object server and displays the received detailed attribute information together with the object.

According to another example, a user may take a picture or provide an image containing an object using a Zoom-In mode. In this case, an enlarged image of the object, which is larger than that taken using a normal mode, is displayed, and it is determined that there is a size variation of the object being displayed. Accordingly, the variation-based weight unit 126 determines attribute information is at "detail-stage", and thus displays detailed information along with the corresponding object. Therefore, the apparatus receives detailed attribute information corresponding to the stage determined by the variation-based weight unit 126 from the object server and displays the received attribute information together with the corresponding object. As described above, the apparatus redetermines the stage of attribute information of an object based on the movement variation or the size variation of the object through the variation-based weight unit 126, and displays brief attribute information and detailed attribute information according to the redetermines stage.

According to another example, the weight value processing unit 121 may determine attribute information of an object being displayed through a preference-based weight unit 127. The preference-based weight unit 127 determines attribute information of a recognized object by referring to the weight information storage unit 130 that stores a weight condition value depending on a preference of a user. For example, the weight information storage unit 130 may store entertainment-related priority information and shopping-related priority information. In this manner, the preference-based weight unit 127 checks if an object being displayed is related to preference information that is input by a user. As a result of the checking, if the object is related to the preference information, the preference-based weight unit 127 determines attribute information of the object as highest. As a result, the apparatus receives detailed attribute information corresponding to the stage determined by the preference-based weight unit 127 and displays the received attribute information together with the corresponding object.

According to another example, the weight value processing unit 121 may determine attribute information of an object being displayed through a composite weight unit 128. Upon a request by a user, the composite determines attribute information of the recognized object by referring to the weight information storage unit 130, which stores a weight condition value determining the priority for each weight condition value of the object-size-based weight unit 122, the focusing-based weight unit 123, the object-number-based weight unit 124, the time-based weight unit 125, the variation-based weight unit 126 and the preference-based weight unit 127. Accordingly, the apparatus receives attribute information corresponding to the stage of attribute determined based on the priority for the weight condition values of the respective weight units 122, 123, 124, 125, 126 and 127 from the object server and displays the received attribute information together with the corresponding object.

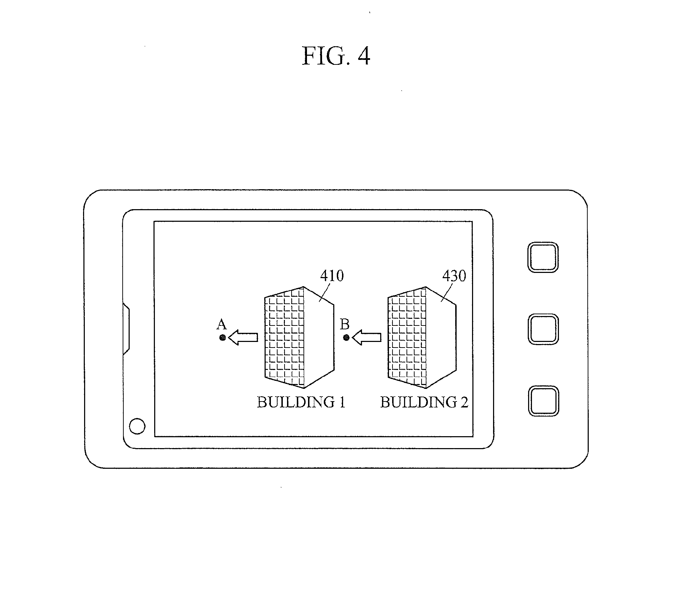

FIG. 4 is a diagram illustrating a display of the apparatus that displays attribute information according to an exemplary embodiment of the present invention.

For example, a user may provide a higher priority to a weight condition value related to focusing and a weight condition value related to the variation of an object. In this case, as shown in FIG. 4, as buildings 1 and 2 410 and 430 corresponding to objects are displayed, the composite weight unit 128 determines attribute information of the buildings 1 and 2410 and 430 by use of the weight condition weight unit 125 value determining the priority for each weight condition value of the respective weight units 122, 123, 124, 125, 126 and 127. That is, since it is determined that the building 1 410 is positioned at the center point of the display, the composite weight unit 128 determines the attribute information of the building 1 410 at a high stage. In addition, since it is determined that the building 2 430 is positioned at a boundary of the display, the composite weight unit 128 determines the stage of attribute information of the building 2 430 at a low stage. Accordingly, the apparatus receives detailed attribute information of the building 1410 and brief attribute information of the building 2 430, and displays each received attribute information together with the buildings 1 and 2 410 and 430. As shown in FIG. 4, if the buildings 1 and 2 410 and 430 move, it is determined that a movement variation of the buildings 1 and 3 410 and 430 occur, and the composite weight unit 128 redetermines the attribute information of the buildings 1 and 2410 and 430. That is, since it is determined that the building 1 410 moves from the center, or more central, point of the display to a boundary 'A,' the composite weight unit 128 determines attribute information of the building 1 410 as low. In addition, it is determined that the building 2 430 moves from a boundary to a center point 'B' of the display, the composite weight unit 127 determines the stage of attribute information of the building 2 430 as high. Accordingly, the apparatus receives brief attribute information of the building 1 410 and detailed attribute information of the building 2 430 from the object server and displays each received attribute information together with the buildings 1 and 2 410 and 430.

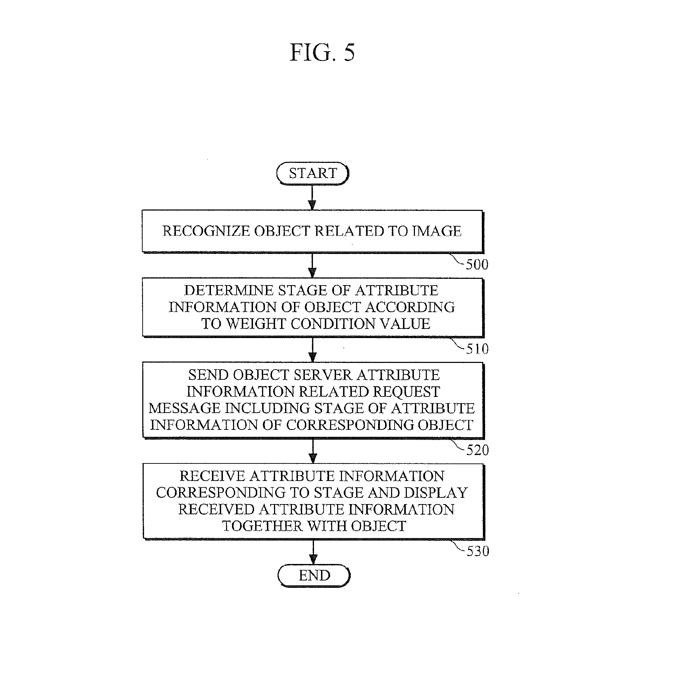

FIG. 5 is a flowchart showing an example of a method of displaying attribute information according to an exemplary embodiment of the present invention.

An apparatus extracts an object from an image, which is input through a built-in camera or provided by an image file, and recognizes the object (500). That is, a user specifies a region to be taken by the camera of the apparatus. As a region of interest is specified by the user, the apparatus extracts an object from the image, and recognizes the object. The apparatus determines attribute information related to the recognized object by referring to the weight information storage unit that stores a weight condition value used to determine the attribute information of the recognized attribute (510).

The apparatus transfers attribute information related request message or messages, to an object server configured to store and manage images of a plurality of objects and attribute information for each object (520). The attribute information related request message may include a determined stage of the attribute information. After that, the apparatus receives attribute information corresponding to the amount attribute information related to the object to display, and displays an image including the received attribute information and the object on the display (530).

In determining the amount of attribute information to be provided to a display from an object server, one of ordinary skill in the art may use various factors and techniques. For example, one of ordinary skill in the art may use processes similar to the ones used in conjunction with the weight value processing units 122, 123, 124, 125, 126, 127 and 128 and their equivalents.

For example, an apparatus may determine the attribute information of an object being displayed based on the size of the recognized object depending on the distance between the apparatus and the object. The apparatus extracts an object from an image displayed, and recognizes the object. The apparatus obtains the area of the object. The apparatus determines attribute information of the object based on the area of the object by referring to a weight information storage that stores a weight condition value related to the size of the object. The area of the object being displayed by the apparatus varies depending on the distance between the apparatus and the object. Accordingly, the smaller an object is viewed on the display, the farther the object is positioned from the apparatus, so the apparatus determines attribute information of the object, and thus determines the attribute information as and/or displays brief attribute information of the object. The larger an object is viewed, the closer the object is positioned to the apparatus, so the apparatus determines the attribute information as and/or displays detailed attribute information of the object on the screen. In this manner, the apparatus may provide detailed attribute information or brief attribute information corresponding to an object based on the area or size of the object being displayed on the screen.

For example, the apparatus may determine the attribute information of an object being displayed based on a position where a recognized object is displayed on the screen. That is, the apparatus extracts an object from an image input through a camera of the apparatus, or receives an image file from another source, and recognizes the object. The apparatus obtains the position where the recognized object is displayed. The apparatus determines the attribute information of the corresponding object based on the difference in distance between the position where the recognized object is displayed and a reference point, such as the center of the display, by referring to a weight information storage unit that stores the weight condition value related to focusing. That is, the terminal apparatus determines the attribute information of an object such that an object closer to the center of the display has more detailed attribute information to be displayed on the screen. The apparatus determines the attribute information of an object such that an object farther from the center of the screen and has more brief attribute information to be displayed on the display. In this manner, the apparatus provides detailed attribute information corresponding to an object based on the difference in distance between the position of the object being displayed and the center of the display.

For example, the apparatus may determine the attribute information of an object being displayed based on the number of objects being displayed. The apparatus extracts objects from an image, input through a camera of the apparatus, or another image providing source, and then recognizes the objects. The apparatus determines the number of recognized objects. After that, the apparatus determines the attribute information of the objects based on the number of objects by referring to a weight information storage unit that stores the weight condition value related to the number of objects being displayed. If only one object is determined to be displayed, the apparatus determines the attribute information of the object as a detail-stage of providing detailed attribute information. If, for example at least three objects are determined to be displayed on the screen, the apparatus determines the stage of attribute information of the object as a brief-stage of providing brief attribute information. In this manner, the apparatus receives brief attribute information or detailed attribute information corresponding to the object based on the determined number of objects from the object server and displays the received attribute information together with the object.

For example, the apparatus may determine the attribute information of a recognized object being displayed based on the variation of the object in position information during a specific time, the time may be preset. That is, the apparatus acquires position information of the object being displayed. The apparatus checks the variation of the object in position information by referring to a weight information storage unit that stores the weight condition value depending on the variation in position information. A user may take a picture through a camera of his/her apparatus while moving, or receive multiple images from a source. In this case, if it is determined that position information of an object that has been recognized from the picture varies with time, the apparatus determines the attribute information of the recognized object as "brief-stage", and provides brief attribute information to display along with the recognized object. A user standing still may take a picture using his/her camera. In this case, it is determined that position information of an object that has been recognized from the picture does not change during a specific time, so the apparatus determines the attribute information of the recognized object as "detail-stage", and provides detailed attribute information to be displayed along with the recognized object. As described above, the apparatus sets the attribute information of a corresponding object based on the change of the object in position information, thereby providing brief attribute information or detailed attribute information of the corresponding object.

For example, the apparatus may determine the attribute information of a recognized object displayed based on the size variation or the movement variation of the object displayed. That is, the apparatus may determine the stage of attribute information of an object displayed based on the size variation or the movement variation of the object by referring to a weight information storage unit that stores the weight condition value depending on the variation of an object. If an object being displayed moves from the center of the display to a boundary, it is determined that a movement variation from the center of the display to the boundary occurs, so the apparatus determines the attribute information of the object as a brief-stage of displaying brief attribute information. Accordingly, the apparatus receives brief attribute information corresponding to the object from the object server and displays the received detailed attribute information together with the object. A user may take a picture of an object in the real world using a zoom-out mode of a camera. In this case, a reduced image of the object, which is smaller than that taken using a normal mode, is displayed, and it is determined that a size variation of the object being displayed occurs. As described above, if it is determined that size variation of an object being displayed occurs, the apparatus determines the attribute information as "brief-stage", and provides detailed attribute information to be displayed along with the corresponding object. Therefore, the apparatus receives brief attribute information from the object server and displays the received attribute information together with the object. As described above, the apparatus redetermines the stage of attribute information of a corresponding object based on the movement variation or the size variation of the object, and displays brief attribute information and detailed attribute information according to the redetermination.

For example, the apparatus may determine the attribute information of an object being displayed based on a preference of a user. That is, the apparatus determines the attribute information of a recognized object by referring to a weight information storage unit that stores a weight condition value depending on the preference of the user. The apparatus may store, for example, entertainment-related priority information and shopping-related priority information in the weight information storage unit. In this manner, the apparatus checks if an object displayed is related to preference information input by a user. As a result of checking, if the object is related to the preference information, the apparatus determines the attribute information of the object as the highest stage. As a result, the apparatus receives detailed attribute information and displays the received attribute information together with the corresponding object.

For example, the apparatus may determine the attribute information of an object being displayed based on the priority for the above methods of determining the attribute information of an object. That is, upon a request by a user, the apparatus determines attribute information of an object displayed by referring to a weight information storage unit in which the priority for weight condition values each related to the above methods are determined and stored. A user may give a higher priority to a weight condition value related to the focusing and a weight condition value related to the variation of an object. In this case, as shown in FIG. 4, as building 1 410 and building 2 430 correspond to objects are displayed, it is recognized that the building 1 is positioned at or near the center point of the display, and the apparatus determines the stage of attribute information of the building 1 410 as a high stage. In addition, since it is recognized that the building 2 430 is positioned at or near a boundary of the display, the apparatus determines the attribute information of the building 2 430 as a low stage. Accordingly, the apparatus receives detailed attribute information of the building 1 410 and brief attribute information of the building 2 430, and displays the received attribute information together with building 1 410 and building 2 430. If the building 1 410 and building 2 430 move as shown in FIG. 4, it is determined that a movement variation of the building 1 410 and building 3 430 occurs, and the apparatus redetermines the attribute information of the building 1 410 and building 2 430. That is, since it is determined that the building 1 410 moves from the center point of the display to a boundary 'A,' the apparatus determines the attribute information of the building 1 410 as a low stage. In addition, since it is determined that the building 2 430 moves from a boundary to a center, or more central, point 'B' of the screen, the apparatus determines the attribute information of the building 2 430 as a high stage. Accordingly, the apparatus receives brief attribute information of the building 1 410 and detailed attribute information of the building 2 430 from the object server and displays the received attribute information on the screen together with the buildings 1 and 2 410 and 430.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
An apparatus for providing attribute information about an object being displayed on a screen of the apparatus in an augmented reality a method thereof are provided. The apparatus for displaying an object, which is extracted from an image input, such as a camera, includes a communication unit, an object recognition unit and a control unit. The communication unit is configured to perform data communication with respect to an object server which stores images of a plurality of objects and attribute information of each object. The object recognition unit is configured to extract the object from the image input and recognize the object. The apparatus determines the attribute information of the object being displayed based on a state of the object and provides attribute information.

## Claims

1. An apparatus to display an object extracted from an image, the apparatus comprising:
a communication unit to communicate to an object server, the object server stores objects and corresponding attribute information;
an object recognition unit to recognize the object; and
a control unit to control a display of attribute information according to the recognized object, and to control an amount of the attribute information corresponding to a weighting of the recognized object stored in the object server.

2. The apparatus of claim 1, further comprising:
a weight information storage unit to store a weight condition value used to determine the weighting of the plurality of objects, wherein the control unit comprises:
a weight value processing unit having at least one weight unit to determine the weight condition value of the attribute information based on a property of the recognized object;
wherein the weight value processing unit preferably further comprises:
a composite weight unit in which the property is based on a combination of different types of weight units.

3. The apparatus of claim 2, wherein the weight value processing unit comprises:
an object-size-based weight unit in which the property is a size of the recognized object.

4. The terminal apparatus of claim 2 or 3, wherein the weight value processing unit further comprises:
a focusing-based weight unit in which the property is a difference in a distance between a point where the recognized object is displayed and
a center point of where the recognized object is displayed.

5. The apparatus of one of claims 2 to 4, wherein the weight value processing unit further comprises:
an object-number-based weight unit in which the property is a number of objects being displayed.

6. The apparatus of apparatus of claims 2 to 5, wherein the weight value processing unit further comprises:
a time-based weight unit in which the property is based on the recognized object being displayed changing in position during a time after a time point.

7. The apparatus of one of claims 2 to 6, wherein the weight value processing unit further comprises:
a variation-based weight unit in which the property is based on a size variation or a movement variation of the recognized object being displayed.

8. The apparatus of one of claims 2 to 7, wherein the weight value processing unit further comprises:
a preference-based weight unit in which the property is based on a preference of a user.

9. A method of displaying an object extracted from an image and attribute information about the object on a terminal apparatus, the method comprising:
recognizing the object from the image input;
determining an amount of attribute information displayed related to the recognized object based on a weight information storage unit, the weight information storage unit storing a weight condition value used to determine the amount of attribute information displayed;
receiving the determined amount of attribute information an object server that stores a plurality of objects and attribute information about the plurality of objects; and
displaying the attribute information together with the recognized object.

10. The method of claim 9, wherein the determining is based on a size of the recognized object being displayed, in which the size of the recognized object being displayed on the screen varies depending on a distance between the apparatus and the object.

11. The method of claim 9 or 10, wherein the determining is based on a difference in a distance between a point and a center of where the recognized object is displayed.

12. The method of one of claims 9 to 11, wherein the determining is based on a number of objects displayed.

13. The method of claim 10, wherein the determining is based on checking if the recognized object being displayed changes in position information during a time after a time point, or/and
wherein the determining is based on a size variation or a movement variation of the recognized object displayed.

14. The method of one of claims 9 to 13, wherein the determining is based on a preference of a user.

15. The method of one of claims 9 to 14, wherein in the determining is based on a combination of different properties used for determining a weight value,
wherein the combination preferably is derived from a combination of at least one of the following properties: attribute information related to the recognized object, the attribute information being determined based on a priority for the determining of a stage of attribute information based on a size of the recognized object being displayed, the attribute information being based on a difference in a distance between a point where the recognized object is displayed and a center point of the where the recognized object is displayed, the attribute information based on a number of objects displayed, the attribute information based on a change of the recognized object in position information displayed during a time, the attribute information based on a variation of the recognized object displayed and the attribute information based on a preference of a user.
